# EUROPÄISCHE PATENTSCHRIFT

(11) **EP 1 716 994 B1**
(45) Veröffentlichungstag und Bekanntmachung des Hinweises auf die Patenterteilung: **09.04.2008**
(21) Anmeldenummer: 06006077.9
(22) Anmeldetag: 24.03.2006
(51) Int. Cl.: B27D 5/00

(54) **Bündigfräs- und Abziehaggregat**
Flush milling and draw blade apparatus
Dispositif de fraisage affleurant et de raclage

(30) Priorität: 29.04.2005 DE 102005020485
(43) Veröffentlichungstag der Anmeldung: 02.11.2006
(73) Patentinhaber: IMA Klessmann GmbH Holzbearbeitungssysteme, 32312 Lübbecke (DE)
(72) Erfinder: Lindenschmidt, Detlef, 32584 Löhne (DE); Bierenriede, Hartmut, 32351 Stemwede-Oppenwehe (DE)
(74) Vertreter: Elbertzhagen, Otto

(56) Entgegenhaltungen:
- EP-A- 0 976 483
- EP-A- 1 044 772
- DE-B3- 10 323 806

## Beschreibung

Die Erfindung bezieht sich auf ein Bearbeitungsaggregat zum Bündigfräsen und Abziehen gemäß den Merkmalen des Oberbegriffs des Patentanspruchs 1.

Ein solches Aggregat ist aus dem Dokument DE 103 23 806 B3 bekannt. Die zugehörige, CNC-gesteuerte Holzbearbeitungsmaschine ermöglicht die Bearbeitung der plattenförmigen Werkstücke in stationärer Aufspannung, wobei der Support dieser Maschine so steuerbar ist, daß die an ihm aufgenommenen Aggregate entlang dem gesamten Umfang um die Werkstücke herumgefahren werden können. Die Schwenkbarkeit des Führungskörpers des Bündigfräs- und Abziehaggregates dient dazu, zum einen insbesondere das als Ziehklinge arbeitende Werkzeug optimal zu dem zu bearbeitenden Kantenband positionieren zu können und des weiteren das Aggregat so auszurichten, daß seine die Bearbeitungswerkzeuge tragenden Bauteile nicht mit dem Werkstück kollidieren.

Bei dem bekannten Bearbeitungsaggregat ist als Bearbeitungswerkzeug lediglich ein Fräser vorgesehen, von dem jeweils eine seiner Schneiden zugleich als Ziehklinge verwendet werden kann. Zum Bündigfräsen umfährt das bekannte Aggregat das zu bearbeitende Werkstück ein erstes Mal, danach wird der Fräser in einer für den Abziehvorgang geeigneten Stellung blockiert, und es muß für den Abziehvorgang das Werkstück ein zweites Mal umfahren werden. Um das Bündigfräsen zugleich an den in horizontaler Aufspannung oben- und untenliegenden Kanten der Schmalseiten vornehmen zu können, sind bei dem bekannten Bearbeitungsaggregat zwei spiegelbildlich einander gegenüber angeordnete Fräser vorgesehen, die entsprechend dem Abstand der zu bearbeitenden Werkstückkanten relativ zueinander justiert werden können.

Des weiteren sind ähnliche Bearbeitungsaggregate bekannt, die zum einen ausschließlich mit Fräsern zum Bündigfräsen und zum anderen ausschließlich mit Ziehklingen ausgestattet sind. Mit solchen Bearbeitungsaggregaten wird das zu bearbeitende Werkstück nacheinander umfahren, um zunächst den Fräsvorgang und danach den Abziehvorgang vorzunehmen. Diese nur für einen der Bearbeitungsvorgänge geeigneten Aggregate sind an dem Support der CNC-Holzbearbeitungsmaschine entweder räumlich getrennt voneinander angeordnet oder können nacheinander an einer Spindel des Supports aufgenommen werden.

Der Erfindung liegt die Aufgabe zugrunde, ein Bearbeitungsaggregat der genannten Art zu schaffen, mit welchem in einem einzigen Teil- oder Vollumlauf um das jeweilige Werkstück herum sowohl das Bündigfräsen als auch das Abziehen des auf die Werkstückschmalseiten aufgebrachten Kantenbandes vorgenommen werden kann.

Diese Aufgabe wird bei einem Bearbeitungsaggregat der genannten Art durch die kennzeichnenden Merkmale des Patentanspruchs 1 gelöst.

Für das erfindungsgemäße Bearbeitungsaggregat ist wesentlich, daß beim Umfahren des betreffenden Werkstücks entlang der zu bearbeitenden Schmalseiten der zumindest einen Ziehklinge stets das Fräswerkzeug vorausfährt, so daß unmittelbar nach dem Abtragen des Überstandes des Kantenbandes an der betreffenden Werkstückkante die Feinbearbeitung der Oberfläche des Kantenbandes erfolgt. So kommt man mit einem einzigen Teilumlauf oder gesamten Umlauf um das Werkstück herum aus, es wird also in einem einzigen Bearbeitungsgang des Bearbeitungsaggregates die Besäumung des Kantenbandes und die Feinbearbeitung der befrästen und gegebenenfalls weiteren Flächen des Kantenbandes vorgenommen. An dem betreffenden Verfahrsupport der CNC-gesteuerten Holzbearbeitungsmaschine kann das Bearbeitungsaggregat fest angebaut werden, in anderer Ausführung kann es als Adapteraggregat in die üblicherweise vorhandene Hauptspindel am Verfahrsupport der Maschine aufgenommen werden.

Vorteilhafte Ausgestaltungsmerkmale der Erfindung ergeben sich aus den Unteransprüchen. Insbesondere ist hervorzuheben, daß am Führungskörper die insgesamt vorhandenen Bearbeitungswerkzeuge zweifach so vorgesehen sind, daß bei horizontaler Aufspannung der Werkstücke sowohl die jeweils obenliegende als auch die untenliegende, die Werkstückschmalseite begrenzende Werkstückkante gleichzeitig bearbeitet werden können. Die beiden hierzu erforderlichen Fräswerkzeuge sind einzeln angetrieben und mit in den zugehörigen Schwenkarm integrierten Antriebsmotoren versehen, wodurch ein ruhiger Lauf und störungsfreier Betrieb gewährleistet ist.

Die Erfindung wird nachfolgend anhand der Zeichnung an einem Ausführungsbeispiel noch näher erläutert. Dabei zeigen:
- Fig. 1: eine Seitansicht des erfindungsgemäßen Bearbeitungsaggregates,
- Fig. 2: einen Horizontalschnitt durch das Aggregat längs der Linie I-I in Figur 1 in einer ersten Arbeitsstellung,
- Fig. 3: einen den Figur 2 entsprechenden Horizontalschnitt durch das Bearbeitungsaggregat in einer zweiten Arbeitsstellung und
- Fig. 4: einen weiteren solchen Horizontalschnitt durch das Bearbeitungsaggregat in einer dritten Arbeitsstellung.

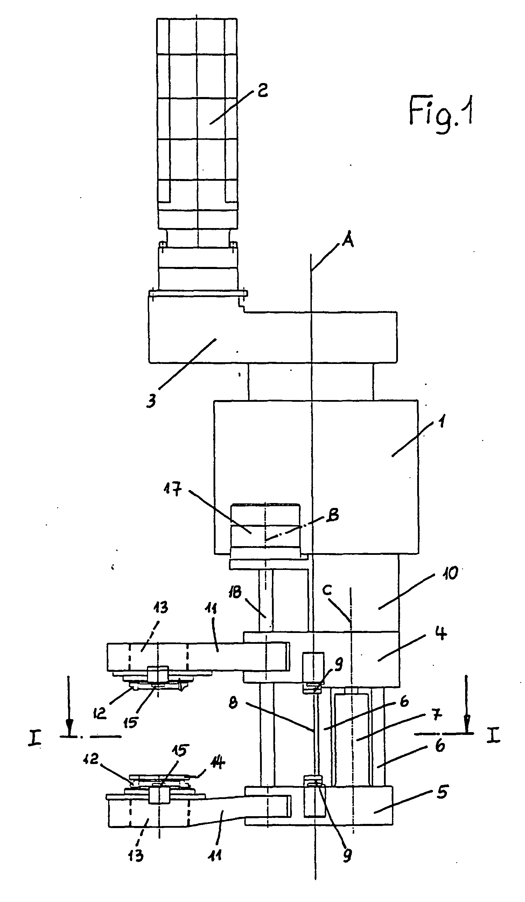

Im einzelnen erkennt man an dem in Figur 1 dargestellten Bearbeitungsaggregat einen Führungskörper 1, der um eine Achse A schwenkbar ist. Der Drehantrieb des Führungskörpers 1 erfolgt über einen Antriebsmotor 2, zwischen dem und dem Führungskörper 1 ein Getriebe 3 angeordnet ist. In der Betriebslage ist der Führungskörper 1 mit seiner Achse A vertikal ausgerichtet, wobei sich der Antriebsmotor 2 und das Getriebe 3 an den Führungskörper 1 nach oben hin anschließen. In dem Führungskörper 1 ist ein daran nach unten ausfahrbarer Träger 10 geführt, an dem eine erste Konsole 4 fest angeordnet ist. Darunter befindet sich in vertikal fluchtender Anordnung eine zweite Konsole 5, die relativ zu der ersten Konsole 4 höhenveränderbar ist. Dementsprechend lassen sich beide Konsolen 4, 5 in Richtung einer vertikalen Achse C unabhängig voneinander auf eine bestimmte Höhenlage einstellen, was - wie nachstehend noch erörtert wird - im Betriebsfall des Aggregates selbsttätig erfolgt. Dazu ist die untere Konsole 5 an vertikalen Führungen 6 angeordnet und an ihr greift ein Hubantrieb 7 an. Zwischen den Konsolen 4, 5 erstreckt sich eine Profilziehklinge 8, in deren Nachbarschaft an beiden Konsolen 4, 5 Seitentaster 9 vorgesehen sind.

An jeder Konsole 4, 5 stehen in radialer Richtung zur Schwenkachse A des Führungskörpers 1 Schwenkarme 10 vor, die in gabelartigen Aufnahmen der Konsolen 4, 5 um eine vertikale Achse B schwenkbar gelagert sind, die in einem Abstand von der Schwenkachse A des Führungskörpers 1 angeordnet ist. An den einander zugekehrten Seiten, also an der Unterseite des oberen Schwenkarms 11 und an der Oberseite des unteren Schwenkarms 11, ist jeweils ein Fräswerkzeug 12 mit aufrechter Rotationsachse angeordnet. Dementsprechend befinden sich die beiden Fräswerkzeuge 12 an den zu dem zu bearbeitenden Werkstück hin liegenden Seiten der Schwenkarme 11. Jedes Fräswerkzeug 12 hat einen eigenen Antriebsmotor 13, der in den Schwenkarm 11 integriert ist. Ferner sind im Bereich der Fräswerkzeuge 12 an den Schwenkarmen 11 Seitentaster 14 und Höhentaster 15 vorgesehen, um die Fräswerkzeuge 12 den zu bearbeitenden Werkstückkanten in Seiten- und Höhenrichtung selbsttätig nachführen zu können. Das Fräswerkzeug 12 und der Seitentaster 14, welcher als Kreisscheibe vor dem Taster 14 angeordnet ist, stehen an der zum Werkstück hin liegenden Seite des Schwenkarms 11 vor.

Die beiden zueinander in Bezug auf eine Horizontalebene spiegelbildlich angeordneten Fräswerkzeuge 12 sind über die Schwenkarme 11 mit einem gemeinsamen Schwenkantrieb 17 gekuppelt, dazu dient eine für beide Schwenkarme 11 gemeinsame Schwenkwelle 18, deren Achse die Achse B ist.

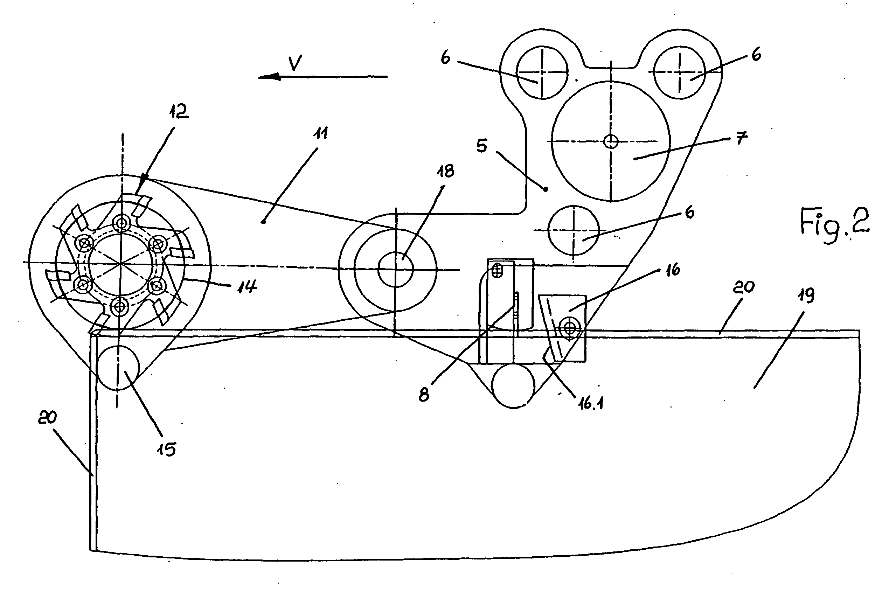

Figur 2 veranschaulicht die Position des Bearbeitungsaggregates bei der Bearbeitung eines plattenförmigen Werkstückes 19, welches ein quadratisches oder rechtekkiges Format hat. Auf die Schmalseiten dieses Werkstücks ist ein Kantenband 20 aufgetragen, welches vor dem Besäumen einen Überstand von etwa 2 mm über die Breitseitenflächen des Werkstücks 19 hinaus hat. Die Vorschubrichtung des Bearbeitungsaggregates ist durch den Pfeil V angegeben. Man erkennt, daß in Vorschubrichtung vornliegend das Fräswerkzeug 12 angeordnet ist, es handelt sich im dargestellten Fall um das entlang der unteren Werkstückkante das Kantenband 20 besäumende Fräswerkzeug 12, in gleicher Weise bearbeitet das in Figur 2 nicht erkennbare, obere Fräswerkzeug 12 das Werkstück 19 entlang der oben liegenden Kante, um auch hier den Überstand des Kantenbandes 20 abzutragen. Das der Ziehklinge 8, die als Profilziehklinge ausgebildet ist, vorausfahrende Fräswerkzeug 12 wird über den Schwenkarm 11 entlang der Werkstückschmalseite geführt. Dazu ist der Schwenkarm 11 mit einem Drehmoment beaufschlagt, welches vom Schwenkantrieb 17 (Fig. 1) aufgebracht wird. Der Schwenkarm 11 stützt sich mit dem Seitentaster 14 an der Außenfläche des Kantenbandes 20 ab, und über den Schwenkantrieb 17 wird der Seitentaster 14 und damit der Schwenkarm 11 einschließlich dem Fräswerkzeug 12 ständig in einer Position gehalten, bei der die Schneidenflugbahn des Fräswerkzeuges 12 über das Kantenband 20 hinwegreicht, also dessen zu beschneidende Kante schneidet. In Höhenrichtung wird über den Höhentaster 15 die Werkstückunterseite bzw. die Werkstückoberseite bei dem nicht dargestellten Fräswerkzeug 12 nahe dem Kantenband 20 abgetastet. Die Höhentaster 15 werden in elastischer Anlage an der Werkstückseite gehalten, so daß im Falle von Toleranzen das jeweilige Fräswerkzeug 12 der Welligkeit des Werkstücks 19 im Randbereich in Höhenrichtung nachgeführt wird. Dementsprechend ist der Antrieb des Trägers 10 und der Hubantrieb 7 ausgeführt, die vorzugsweise beide als pneumatische Antriebe ausgebildet sind.

Die Profilziehklinge 8 ist so angeordnet, daß sie von der Schwenkachse A des Führungskörpers 1 tangiert wird. Hinter der Profilziehklinge 8 findet sich eine Flachziehklinge 16, deren Schneide vorzugsweise in der Ebene der betreffenden Werkstückbreitseite angeordnet ist, um entlang der Fuge zwischen dem Kantenband 20 und dem Werkstück 19 Unebenheiten, die durch Leimaustritte begründet sein können, zu begradigen.

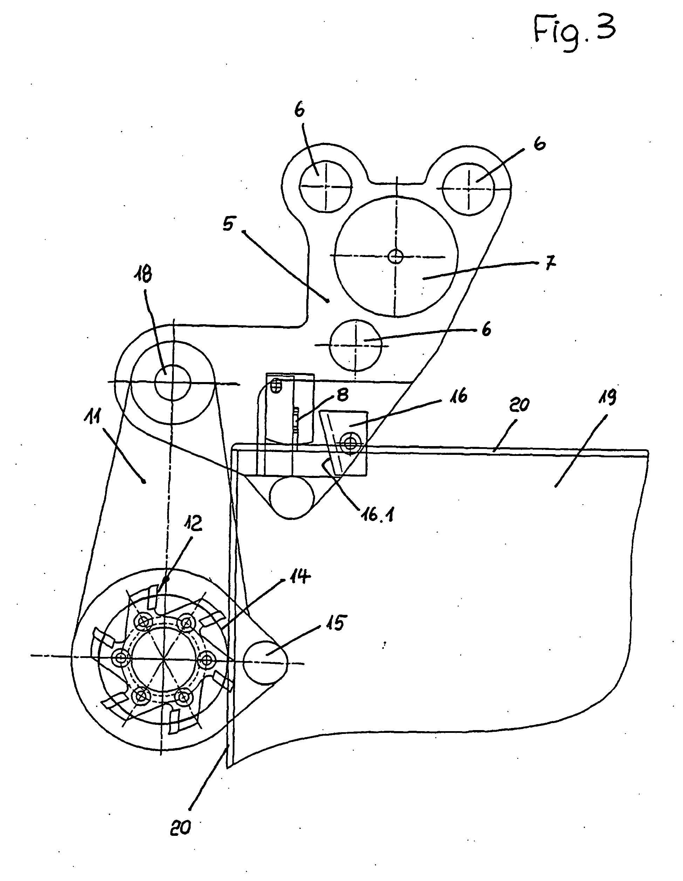

Figur 3 zeigt eine der Winkellagen des Schwenkarms 11 mit dem Fräswerkzeugs 12 relativ zu der Konsole 5 am Führungskörper 1. Beim Überfahren der rechtwinkligen Werkstückecke sorgt das auf den Schwenkarm 11 ausgeübte Drehmoment zusammen mit dem Taster 14 dafür, daß das Fräswerkzeug 12 um die Werkstückecke herumgeführt wird, ohne den Schneideneingriff am Kantenband zu verlieren. Erreicht die Profilziehklinge 8 die Werkstückecke, schwenkt der Führungskörper 1 und damit die Konsole 5 um den Eckwinkel des Werkstücks 19, und es bleibt hierbei die Profilziehklinge 8 in dauerndem Eingriff mit dem Kantenband 20. Auch die Flachziehklinge 16 bleibt beim Überfahren der Werkstückecke in Funktion, dazu ist ihre Schneide 16.1, die sich in Richtung der Ebene der Werkstückbreitseite erstreckt, ausreichend lang ausgebildet. Beim Überfahren der Werkstückecke schwenken die Schwenkarme 11 kollisionsfrei über die Werkstückbreitseiten im Eckbereich, entsprechend befindet sich hierbei die Werkstückecke zwischen den beiden Schwenkarmen in ausreichendem Abstand hierzu.

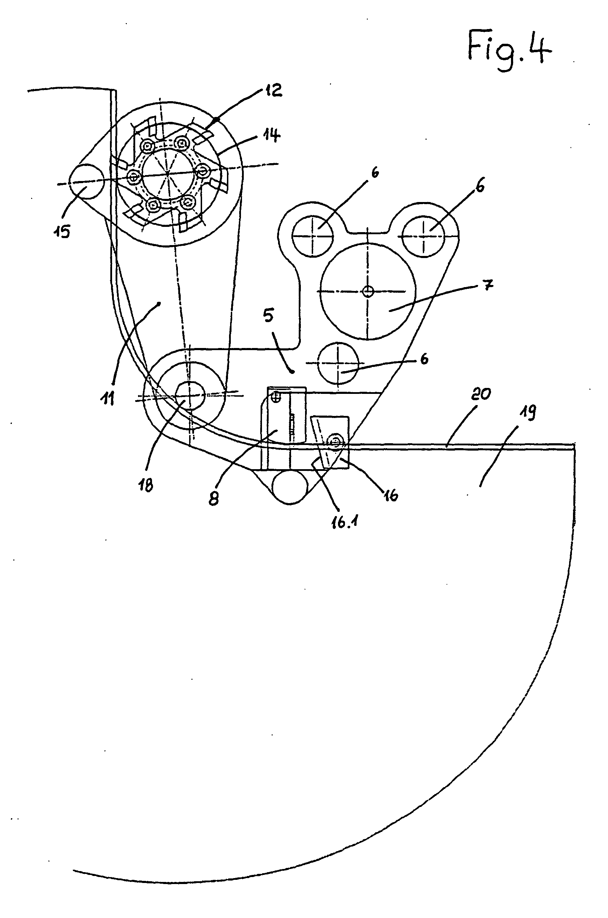

Während Figur 3 veranschaulicht, wie mit dem Fräswerkzeug 12 und den Ziehklingen 8, 16 eine Außenecke des Werkstücks 19 überfahren wird, veranschaulicht Figur 4 das Durchfahren einer gerundeten Innenecke an einem anders geformten Werkstück 19. Da die Ziehklinge 8 möglichst senkrecht zur Oberfläche des Kantenbandes 20 ausgerichtet sein soll, muß sich wegen der Rundung der Innenecke die Lage der Ziehklinge 8 ständig ändern. Dazu wird der gesamte Führungskörper 1 einschließlich der Konsole 5 entsprechend um die Achse A geschwenkt, wobei sich ständig die Winkellage zwischen dem Schwenkarm 11 und der Konsole 5 ändert. Auch hierbei wird das Fräswerkzeug 12 über den Schwenkantrieb 17 für den Schwenkarm 11 über den Seitentaster 14 so geführt, daß die Schneidenflugbahn des Fräswerkzeugs 12 die Unter- bzw. Oberkante des Kantenbandes 20 ständig überdeckt bzw. schneidet.

## Patentansprüche

1. Bearbeitungsaggregat zum Bündigfräsen und Abziehen eines auf die Schmalseiten plattenförmiger, aus einem Holzwerkstoff bestehender Werkstücke (19) aufgegrachten Kantenbandes (20) mit zumindest einem Fräswerkzeug (12), das entlang der zu besäumenden Werkstückkante verfahrbar und dazu an einem Führungskörper (1) angeordnet ist, der an einem Verfahrsupport einer programmgesteuerten Holzbearbeitungsmaschine um eine zur Verfahrebene des Fräswerkzeugs (12) senkrechten Achse (A) schwenkbar angeordnet ist,
**dadurch gekennzeichnet,**
**daß** an dem Führungskörper (1) zumindest eine Ziehklinge (8, 16) fest angeordnet ist, sich das Fräswerkzeug (12) in der Vorschubrichtung vor der Ziehklinge (8, 16) befindet und an einem Schwenkarm (11) gelagert ist, der am Führungskörper (1) um eine zu dessen Schwenkachse (A) parallele Achse (B) gelagert ist, wobei der Schwenkwinkel des Schwenkarms (11) in Abhängigkeit von dem Verlauf der zu besäumenden Werkstückkante gesteuert ist.

2. Bearbeitungsaggregat nach Anspruch 1,
**dadurch gekennzeichnet,**
**daß** das Fräswerkzeug (12) einen Antriebsmotor (13) hat, der am Schwenkarm (11) angeordnet ist.

3. Bearbeitungsaggregat nach Anspruch 1 oder 2,
**dadurch gekennzeichnet,**
**daß** der Schwenkarm (11) einen sich an die Werkstückschmalseite mit der zu besäumenden Werkstückkante anlegenden Taster (14) aufweist und mit einem Schwenkantrieb (17) versehen ist, welcher den Schwenkarm (11) mit seinem Taster (14) in Anlage an der Werkstückschmalseite hält.

4. Bearbeitungsaggregat nach Anspruch 3,
**dadurch gekennzeichnet,**
**daß** das Fräswerkzeug (12) und der Taster (14) an der werkstückzugewandten Seite des Schwenkarms (11) vorstehend angeordnet sind.

5. Bearbeitungsaggregat nach einem der Ansprüche 1 - 4,
**dadurch gekennzeichnet,**
**daß** die Achse (B), um die der Schwenkarm (11) schwenkbar ist, in der Vorschubrichtung vor der Schneide der Ziehklinge (8, 16) liegt.

6. Bearbeitungsaggregat nach einem der Ansprüche 1 - 5,
**dadurch gekennzeichnet,**
**daß** die Schwenkachse (A) des Führungskörpers (1) die Schneide der Ziehklinge (8) tangiert oder mit dieser fluchtet.

7. Bearbeitungsaggregat nach Anspruch 6,
**dadurch gekennzeichnet,**
**daß** die Ziehklinge (8) eine Profilziehklinge mit einer entsprechend profilierten Schneide ist.

8. Bearbeitungsaggregat nach Anspruch 7,
**dadurch gekennzeichnet,**
**daß** in der Vorschubrichtung hinter der Profilziehklinge (8) eine Flachziehklinge (16) am Führungskörper (1) fest angeordnet ist.

9. Bearbeitungsaggregat nach einem der Ansprüche 1 - 8,
**dadurch gekennzeichnet,**
**daß** am Führungskörper (1) zwei Fräswerkzeuge (12) mit je einem Schwenkarm (11) sowie zumindest zwei Ziehklingen (8, 16) spiegelbildlich zueinander in Bezug zu einer der Radialebenen der Schwenkachse (A) des Führungskörpers (1) angeordnet sind.

10. Bearbeitungsaggregat nach Anspruch 9,
**dadurch gekennzeichnet,**
**daß** die beiden Schwenkarme (11) einen gemeinsamen Schwenkantrieb (17) haben, mit dem sie mittels einer gemeinsamen Schwenkwelle (18) verbunden sind.

11. Bearbeitungsaggregat nach einem der Ansprüche 9 oder 10,
**dadurch gekennzeichnet,**
**daß** der am Führungskörper (1) endseitig angeordnete Schwenkarm (11) an einer Konsole gelagert ist, an der die zumindest eine weitere Ziehklinge (8, 16) angeordnet und die mittels Führungen (6) und einem Hubantrieb (7) am Führungskörper (1) in der Richtung parallel zu dessen Schwenkachse (A) verstellbar ist.

## Claims

1. Machining assembly for flush milling and drawing on of an edging strip (20) applied to the narrow sides of plate-type workpieces (19) made from a wooden material, having at least one milling tool (12) which is capable of moving along the edge of the workpiece to be trimmed and which for this purpose is mounted on a guide body (1) which is mounted on a movable support of a program-controlled wood processing machine for swivel movement about an axis (A) perpendicular to the travel plane of the milling tool (12),
**characterised in that**
at least one draw blade (8, 16) is mounted fixed on the guide body (1), the milling tool (12) is located in the feed direction in front of the draw blade (8, 16) and is supported on a swivel arm (11) which is mounted on the guide body (1) about an axis (B) parallel to the swivel axis (A) thereof wherein the swivel angle of the swivel arm (11) is controlled in dependence on the path of the workpiece edge which is to be trimmed.

2. Machining assembly according to claim 1,
**characterised in that**
the milling tool (12) has a drive motor (13) which is mounted on the swivel arm (11).

3. Machining assembly according to claim 1 or 2,
**characterised in that**
the swivel arm (11) has a sensor (14) bearing against the narrow side of the workpiece having the workpiece edge which is to be trimmed, and is provided with a swivel drive (17) which holds the swivel arm (11) with its sensor (14) bearing against the narrow side of the workpiece.

4. Machining assembly according to claim 3,
**characterised in that**
the milling tool (12) and the sensor (14) are mounted protruding on the side of the swivel arm (11) facing the workpiece.

5. Machining assembly according to one of claims 1 to 4,
**characterised in that**
the axis (B) about which the swivel arm (11) can swivel lies in the feed direction in front of the cutting edge of the draw blade (8, 16).

6. Machining assembly according to one of claims 1 to 5,
**characterised in that**
the swivel axis (A) of the guide body (1) touches the cutting edge of the draw blade (8) or is flush with same.

7. Machining assembly according to claim 6,
**characterised in that**
the draw blade (8) is a profiled draw blade with a correspondingly profiled cutting edge.

8. Machining assembly according to claim 7,
**characterised in that**
a flat draw blade (16) is fixedly mounted on the guide body (1) behind the profiled draw blade (8) seen in the feed direction.

9. Machining assembly according to one of claims 1 to 8,
**characterised in that**
two milling tools (12) each by a swivel arm (11) and at least two draw blades (8, 16) are mounted on the guide body (1) mirror-symmetrical relative to one another in relation to one of the radial planes of the swivel axis (A) of the guide body (1).

10. Machining assembly according to claim 9,
**characterised in that**
the two swivel arms (11) have a common swivel drive (17) to which they are connected by means of a common swivel shaft (18).

11. Machining assembly according to one of claims 9 or 10,
**characterised in that**
the swivel arm (11) which is mounted at the end on the guide body (1) is supported on a console bracket on which the at least one further draw blade (8, 16) is mounted and which is displaceable by means of guides (6) and a lift drive (7) on the guide body (1) in a direction parallel to the swivel axis (A) thereof.

## Revendications

1. Dispositif de traitement pour le fraisage affleurant et le raclage d'une bande de chant (20), appliquée sur les côtés étroits de pièces (19) en forme de panneaux, consistant en un matériau dérivé du bois, avec au moins un outil de fraisage (12) qui peut être conduit le long du bord de la pièce devant être traité, et est agencé, dans ce but, sur un corps de guidage (1) qui est monté, en pivotement autour d'un axe (A) perpendiculaire au plan de déplacement de l'outil de fraisage (12), sur un support mobile d'une machine de traitement du bois commandée par programme,
**caractérisé en ce que**,
sur le corps de guidage (1) est agencé fixement au moins une lame de raclage (8, 16), que l'outil de fraisage (12) se trouve en amont de la lame de raclage (8, 16), dans la direction d'avance, et est monté sur un bras pivotant (11) qui est monté sur le corps de guidage (1) en pivotement autour d'un axe (B) parallèle à l'axe de pivotement (A) de celui-ci, l'angle de pivotement du bras pivotant (11) étant commandé en fonction du contour du bord de la pièce qui doit être traité.

2. Dispositif de traitement selon la revendication 1,
**caractérisé en ce que**
l'outil de fraisage (12) possède un moteur de commande (13) qui est agencé sur le bras pivotant (11).

3. Dispositif de traitement selon revendication 1 ou 2,
**caractérisé en ce que**
le bras pivotant (11) comprend un palpeur en contact avec le côté étroit de la pièce présentant le bord à traiter, et est pourvu d'un mécanisme de pivotement qui maintient le bras pivotant (11) avec son palpeur (14) en contact avec le côté étroit de la pièce.

4. Dispositif de traitement selon la revendication 3,
**caractérisé en ce que**
l'outil de fraisage (12) et le palpeur (14) sont agencés en saillie sur le côté du bras pivotant (11) qui est orienté vers la pièce.

5. Dis.positif de traitement selon l'une des revendications 1 à 4,
**caractérisé en ce que**
l'axe (B), autour duquel le bras pivotant (11) peut pivoter, est disposé, dans la direction d'avance, en amont du tranchant de la lame de raclage (8, 16).

6. Dispositif de traitement selon l'une des revendications 1 à 5,
**caractérisé en ce que**
l'axe de pivotement (A) du corps de guidage (1) est tangent au tranchant de la lame de raclage (8) ou est en alignement avec celle-ci.

7. Dispositif de traitement selon la revendication 6,
**caractérisé en ce que**
la lame de raclage (8) est une lame de raclage profilée, avec un tranchant adéquatement profilé.

8. Dispositif de traitement selon la revendication 7,
**caractérisé en ce que**,
dans la direction d'avance, en aval de la lame de raclage profilée (8), une lame de raclage plate (16) est agencée fixement sur le corps de guidage (1).

9. Dispositif de traitement selon l'une des revendications 1 à 8,
**caractérisé en ce que**,
sur le corps de guidage (1), sont agencés deux outils de fraisage (12) avec chacun un bras pivotant (11) ainsi qu'au moins deux lames de raclage (8, 16) en symétrie spéculaire par rapport à l'un des plans radiaux de l'axe de pivotement (A) du corps de guidage (1) .

10. Dispositif de traitement selon la revendication 9,
**caractérisé en ce que**
les deux bras pivotants (11) possèdent un mécanisme de pivotement (17) commun, auquel ils sont reliés au moyen d'un arbre de pivotement (18) commun.

11. Dispositif de traitement selon la revendication 9,
**caractérisé en ce que**
le bras pivotant (11), agencé à l'extrémité du corps de guidage (1), est monté sur une console, sur laquelle l'autre lame de raclage (6) au moins prévue est disposée et qui, au moyen de guides (6) peut être déplacée dans la direction parallèle à son axe de pivotement (A).
